# EUROPÄISCHE PATENTSCHRIFT

(11) **EP 1 920 682 B1**
(45) Veröffentlichungstag und Bekanntmachung des Hinweises auf die Patenterteilung: **18.11.2009**
(21) Anmeldenummer: 08101504.2
(22) Anmeldetag: 25.08.2005
(51) Int. Cl.: A47C 27/10, A61G 7/057

(54) **Vorrichtung zur Ermittlung der Höhe einer Luftkammer**
Device for detecting the height of an air chamber
Dispositif pour détecter l'élévation d'une chambre d'air

(30) Priorität: 31.08.2004 DE 102004041996
(43) Veröffentlichungstag der Anmeldung: 14.05.2008
(62) Teilanmeldung aus: 05777929.0
(73) Patentinhaber: Friedrichs, Arno, D-95326 Kulmbach (DE)
(72) Erfinder: Friedrichs, Arno, D-95326 Kulmbach (DE)
(74) Vertreter: Eichstädt, Alfred

(56) Entgegenhaltungen:
- US-A- 4 542 547

## Beschreibung

Die Erfindung betrifft eine Vorrichtung zur Ermittlung der Höhe einer Luftkammer.

Es sind bereits Liegevorrichtungen bekannt, die aufblasbar sind. Eine einfache Form einer derartigen Liegevorrichtung ist eine Luftmatratze. Diese weist eine einzige oder mehrere Luftkammern auf, die jeweils über einen Luftanschluss mit Luft befüllbar sind, beispielsweise unter Verwendung eines Kompressors. Der jeweilige Luftanschluss wird nach dem Befüllen der jeweiligen Luftkammer mittels eines Stöpsels verschlossen.

Aus der DE 20 2004 000 701 U1 ist ein mit Druckluft befüllbares Liegepolster für ein Liegemöbel bekannt, wobei das Liegepolster über einen Kompressor mit Druckluft beaufschlagbar ist. Auf der Oberseite des Liegepolsters ist im Bereich der zu erwartenden Lordose des Schlafenden mindestens eine, vorzugsweise drei, zusätzliche, unabhängige Luftkammern vorgesehen. Die Luftkammern erstrecken sich über die gesamte Breite des Liegepolsters. Jede Luftkammer weist einen Anschluss für einen Kompressor auf, so dass jede Luftkammer einzeln mit Druckluft beaufschlagbar ist.

Aus der DE 696 11 490 T2 ist eine Matratze mit einer durch den Benutzer regulierbaren Festigkeit bekannt. Die Matratze besteht aus einem Kern mit einer Struktur aus einer gefütterten Schicht auf jeder Seite sowie einer gepolsterten Schicht auf ebenfalls jeder Seite. Mindestens eine der gefütterten Schichten ist ein retikularer Körper mit einem in der Regel prismatisch-rechteckigen Aufbau.

Die Struktur basiert auf einem lamellengewandeten Körper, der durch mehrere querverlaufende Scheidungen unterteilt ist, die die nebeneinanderliegenden querverlaufenden versiegelten Luftkammern definieren. Jede Luftkammer kann einzeln aufgeblasen werden, so dass je nach dem Druck, mit dem die querverlaufenden Kammern des retikularen Körpers versehen wurden, dieser Körper verschiedene Festigkeiten aufweisen kann. Weiterhin ist eine Kompressoranlage vorgesehen, die durch ein Luftreservedepot unterstützt wird und die querverlaufenden Luftkammern über unabhängig und einzeln steuerbare Elektroventile mit Druck versorgt.

Aus der US-A-4542547 ist eine Liegevorrichtung bekannt, die eine Matratze mit einer Vielzahl von gitterförmig angeordneten Luftkammern aufweist, welche mit jeweils mindestens einem Luftanschluss versehen sind. Weiterhin weist die bekannte Liegevorrichtung eine Vielzahl von steuerbaren Ventilen auf, wobei jedes Ventil einer der Luftkammern zugeordnet ist. Ferner enthält die Liegevorrichtung eine Vielzahl von Sensoren und eine mit den Sensoren verbundenen Steuereinheit, die die Ventile in Abhängigkeit von denn Ausgangssignalen der Sensoren individuell steuert. Als Luftquelle für die bekannte Liegevorrichtung dient ein Kompressor.

Der Erfindung liegt die Aufgabe zugrunde, eine Vorrichtung zur Ermittlung der Höhe einer Luftkammer anzugeben.

Diese Aufgabe wird durch eine Vorrichtung mit den im Anspruch 1 angegebenen Merkmalen gelöst. Vorteilhafte Ausgestaltungen und Weiterbildungen der Erfindung ergeben sich aus den abhängigen Ansprüchen.

Eine Vorrichtung mit den erfindungsgemäßen Merkmalen weist den Vorteil auf, dass die Befüllung der einzelnen Luftkammern sensorgesteuert durch eine Steuereinheit vorgenommen werden kann. Bei diesen Sensoren handelt es sich um Höhensensoren, so dass die Luftzufuhr zu jeder der Luftkammern so eingestellt werden kann, dass die jeweilige Luftkammer eine gewünschte Höhe aufweist. Diese gewünschte Höhe ist vorzugsweise abhängig von einem eingestellten Matratzenprofil.

Eine vorteilhafte Ausgestaltung der Luftkammern ist im Anspruch 6 angegeben. Sind die Luftkammern jeweils in Form eines Faltenbalges realisiert, dann begünstigt dies die Einstellung einer gewünschten Höhe und eines gewünschten Druckes in jeder der Luftkammern.

Weitere vorteilhafte Eigenschaften der Erfindung ergeben sich aus deren beispielhafter Erläuterung anhand der Figuren. Es zeigt
- Figur 1: eine schematische perspektivische Ansicht einer bei einer Liegevorrichtung verwendeten Matratze,
- Figur 2: eine Darstellung zur Erläuterung der Funktionsweise einer Liegevorrichtung,
- Figur 3: eine schematische Ansicht zur Veranschaulichung einer bevorzugten Ausführungsform einer Luftkammer,
- Figur 4: eine weitere Darstellung zur Erläuterung der Funktionsweise einer Liegevorrichtung und
- Figur 5: Skizzen eines erfindungsgemäßen Ausführungsbeispiels zur Messung der Höhe einer Luftkammer.

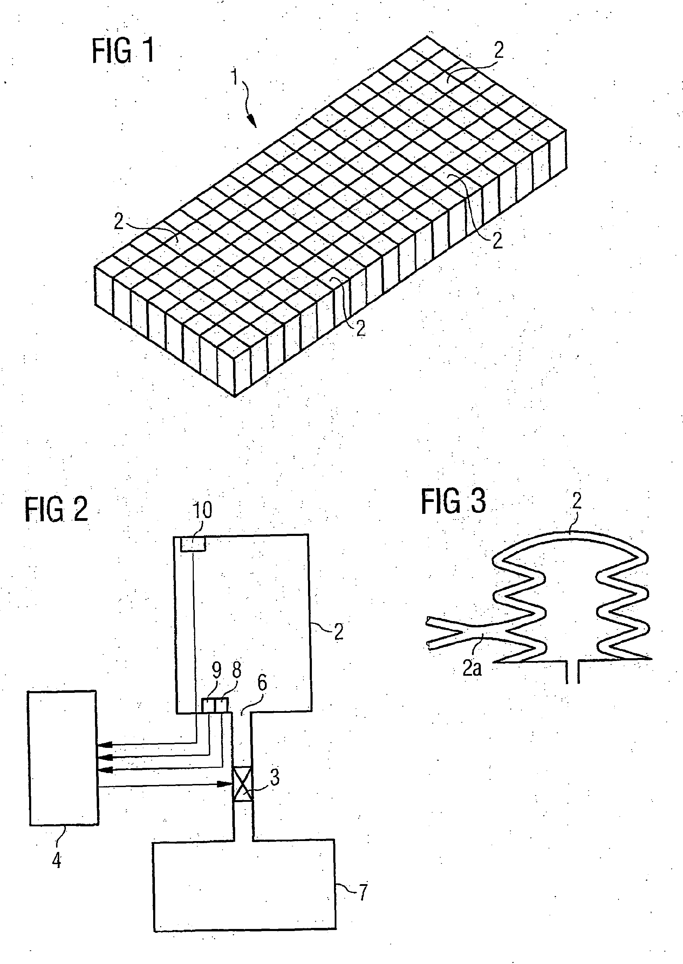

Bei den Figuren 1 - 4 handelt es sich nicht um Ausführungsformen der Erfindung, sondern um Darstellungen, die das Verständnis der Erfindung erleichtern.

Die Figur 1 zeigt eine schematische perspektivische Ansicht einer bei einer Liegevorrichtung verwendeten Matratze. Die dargestellte Matratze 1 weist eine Vielzahl von gitterförmig angeordneten Luftkammern 2 auf. Jede dieser Luftkammern hat eine quadratische, rechteckige oder runde Grundfläche. Bei einer quadratischen Grundfläche hat jede Luftkammer beispielsweise eine Länge und eine Breite im Bereich zwischen 4 und 10 cm. Die Höhe jeder Luftkammer kann in Abhängigkeit von der zugeführten Luftmenge beispielsweise im Bereich zwischen 6 und 12 cm eingestellt werden. Die gesamte Länge der Matratze beträgt beispielsweise 200 cm, ihre Breite 100 cm.

Jede der Luftkammern 2 der Matratze 1 kann individuell mit Luft bepumpt werden, so dass für jede einzelne der Luftkammern der dort herrschende Luftdruck und die Höhe individuell einstellbar sind. Dieses individuelle Bepumpen einer Luftkammer wird im Zusammenhang mit der Figur 2 veranschaulicht, die eine Darstellung zur Erläuterung der Funktionsweise einer Liegevorrichtung zeigt.

Die dort dargestellte Luftkammer 2 enthält einen Luftanschluss 6, der über ein Ventil 3 mit einer Druckluftquelle 7 verbunden ist. Das Ventil 3 wird geöffnet und geschlossen durch Steuersignale, die von einer Steuereinheit 4 zur Verfügung gestellt werden. Die Steuereinheit 4, die einen Prozessor aufweist, generiert die genannten Steuersignale in Abhängigkeit von ihr zugeführten Sensorausgangssignalen.

Die in der Figur 2 dargestellte Luftkammer 2 weist ebenso wie alle anderen Luftkammern der Matratze einen Drucksensor 8, einen Höhensensor 9 und einen Lagesensor 10 auf. Die Ausgangssignale der genannten Sensoren werden der Steuereinheit 4 zugeführt, von deren Prozessor ausgewertet und in ein Steuersignal für das Ventil 3 umgesetzt, wodurch das Ventil geöffnet oder geschlossen wird und damit durchlässig ist oder sperrt. Gegebenenfalls ist es auch möglich, mit weniger Lagesensoren auszukommen, um die Liegeposition der auf der Matratze liegenden Person zu detektieren. Dazu genügt möglicherweise ein einziger Lagesensor, der in einer der Luftkammern positioniert ist.

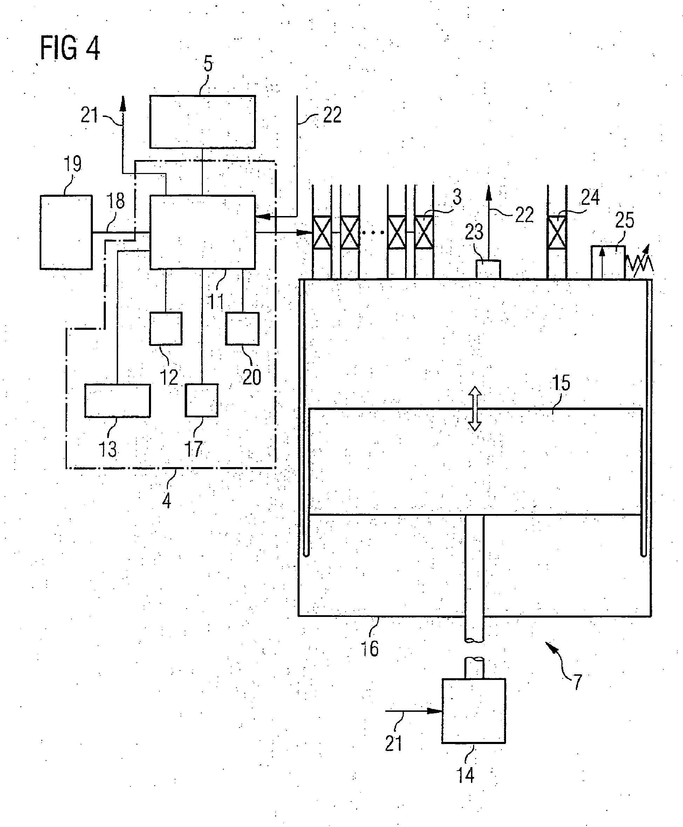

Durch eine Auswertung der vom Drucksensor 8 gelieferten Sensorsignale kann der in der jeweiligen Luftkammer herrschende Luftdruck dahingehend überwacht werden, ob er einem gewünschten Matratzenprofil entspricht oder nicht. Weiterhin kann durch eine Auswertung der Ausgangssignale des Drucksensors 8 der Luftdruck in der jeweiligen Luftkammer dahingehend überwacht werden, dass er einen vorgegebenen zulässigen Maximaldruck nicht überschreitet. Dadurch ist sichergestellt, dass eine Luftkammer nicht in unerwünschter Weise platzen und die auf der Matratze liegende Person gefährden kann. Zusätzlich kann - um ein Platzen von Luftkammern der Matratze zu vermeiden - auch mittels eines mechanischen Überdruckventils 25 (siehe Figur 4) die Luft der Druckluftquelle 7 begrenzt werden, wobei das Überdruckventil beispielsweise in die Leitungsanschlussplatte für die Luftkammerzuleitungen integriert ist. Zusätzlich oder alternativ dazu kann auch ein von der Steuereinheit 4 angesteuertes elektrisches Sicherheitsventil 24 (siehe Figur 4) vorgesehen sein.

Durch eine Auswertung der vom Höhensensor 9 gelieferten Sensorsignale kann die Höhe der jeweiligen Luftkammer dahingehend überwacht werden, ob sie dem derzeit eingestellten Matratzenprofil entspricht oder angepasst werden muss. Die Höhenmessung erfolgt beispielsweise dadurch, dass auf der Unterseite der oberen Begrenzungswand der Luftkammer eine reflektierende Schicht aufgebracht wird und der Abstand der reflektierenden Schicht vom Höhensensor 9 erfasst wird.

Durch eine Auswertung der von den Lagesensoren 10 gelieferten Steuersignale kann ermittelt werden, ob die auf der Matratze liegende Person auf dem Bauch, auf dem Rücken oder auf der Seite liegt und ein der jeweiligen Liegeposition zugehöriges Matratzenprofil eingestellt werden. Zu dieser Lageermittlung sind beispielsweise im Bereich des oberen Randes der Schlafanzughose einer auf der Matratze schlafenden Person verschiedene Signalgeber befestigt, beispielsweise eingenäht. Ein erster Geber befindet sich im Bereich des Rückens, ein zweiter Geber im Bereich des Bauches, ein dritter Geber auf der linken Seite und ein vierter Geber auf der rechten Seite. Befinden sich diese Signalgeber in der Nähe eines der Lagesensoren 10, dann gibt der jeweilige Lagesensor ein jeweils charakteristisches Kennsignal an die Steuereinheit 4 ab, anhand dessen die Steuereinheit unter Verwendung von in einem Liegeprofilspeicher abgespeicherten Daten erkennt, ob die auf der Matratze liegende Person auf dem Bauch, auf dem Rücken, der linken Seite oder der rechten Seite liegt. Liegt die Person beispielsweise auf dem Rücken, dann verursacht lediglich der im Bereich des Rückens angeordnete Signalgeber über den in der Nähe angeordneten Lagegeber 10 eine Meldung an die Steuereinheit 4. Alle anderen Signalgeber sind soweit vom jeweils nächstliegenden Lagesensor entfernt, dass die weiteren Lagesensoren kein Signal abgeben. Folglich stellt die Steuereinheit 4 in diesem Fall ein Matratzenprofil ein, das einer auf dem Rücken schlafenden Person entspricht. Dazu verwendet die Steuereinheit 4 Daten, die in einem Matratzenprofilspeicher abgespeichert sind.

Die Figur 3 zeigt eine schematische Ansicht zur Veranschaulichung einer bevorzugten Ausführungsform einer Luftkammer. Diese ist in Form eines Faltenbalges realisiert, der aus einem weichen Kunststoffmaterial besteht. Wird in diese Luftkammer von der Unterseite Luft gepumpt, dann werden die Falten in dem Sinne gestreckt, dass sich die Höhe der Luftkammer vergrößert. Wird hingegen Luft aus der Luftkammer abgelassen, dann sinkt der Faltenbalg wieder zusammen, so dass sich die Höhe der Luftkammer verkleinert. Einander benachbarte Faltenbalge der Matratze 1 sind - wie es durch das in der Figur 3 dargestellte Kontaktstück 2a veranschaulicht ist - durch einen Vulkanisiervorgang miteinander verbunden. Diese Verbindung einander benachbarter Faltenbalge befindet sich im mittleren oder unteren Bereich des jeweiligen Faltenbalges. Dadurch ist die Einstellung der gewünschten Höhe eines Faltenbalges nicht beeinträchtigt. Die in der Luftkammer 2 befindlichen Sensoren sind in der Figur 3 aus Gründen der Übersichtlichkeit nicht dargestellt.

Alternativ zu der in der Figur 3 dargestellten Ausführungsform können die Luftkammern auch in Form einer teleskopierbaren Kolben-Zylinder-Verbindung realisiert sein.

Die Figur 4 zeigt eine weitere Darstellung zur Erläuterung der Funktionsweise einer Liegevorrichtung. In dieser Figur sind insbesondere die Steuereinheit 4 und die Luftquelle 7 detaillierter gezeigt.

Die Luftquelle 7 weist ein Kolbengehäuse 16 auf, innerhalb dessen ein Kolben 15 auf und ab bewegbar ist. Bei der Aufwärtsbewegung des Kolbens 15 wird Luft in Richtung der Ventile 3 der Luftkammern gepresst. Ist das jeweilige Ventil geöffnet, dann wird die durch das Ventil gepresste Luft in die jeweilige Luftkammer gepumpt. Bei der Abwärtsbewegung des Kolbens kann - sofern das jeweilige Ventil geöffnet ist - Luft aus der jeweils zugehörigen Luftkammer abgelassen werden. Die Bewegung des Kolbens 15 wird durch einen Linearmotor 14 hervorgerufen, der seinerseits mit Steuersignalen beaufschlagt wird, die ihm von der Steuereinheit 11 über eine Motorsteuerleitung 21 zugeführt werden. Die Steuereinheit 11 sorgt dafür, dass ein Ventil zum Einpumpen oder Ablassen von Luft während der Auf- bzw. Abbewegung des Kolbens nur dann geöffnet wird, wenn der Druck in der jeweiligen Luftkammer mit dem in der Pumpenkammer des Kolbengehäuses herrschenden Luftdruck übereinstimmt. Zu diesem Zweck ist auch im Bereich des Kolbengehäuses ein Drucksensor 23 vorgesehen, dessen Ausgangssignal der Steuereinheit 4 über eine Leitung 22 zugeführt wird.

Der Vorteil einer derartigen Ausgestaltung der Luftquelle 7 besteht darin, dass das Einbringen von Luft in die Luftkammern der Matratze und das Auslassen von Luft aus den Luftkammern der Matratze geräuschlos erfolgt. Dies ist darauf zurückzuführen, dass sich der Kolben 15 im Kolbengehäuse 16 nur sehr langsam bewegen muss, da eine Änderung des Luftdrucks in den Luftkammern nicht abrupt erfolgen soll, sondern langsam. Dies hat den Vorteil, dass für die auf der Matratze liegende Person die Änderung des Luftdruckes unauffällig erfolgt.

Die Steuerung der Ventile erfolgt - wie bereits oben ausgeführt wurde - durch Steuersignale, die von der Steuereinheit 4 zur Verfügung gestellt werden - für jedes der Ventile und damit für jede Luftkammer individuell.

Die Steuereinheit 4 weist einen Prozessor 11, einen Matratzenprofilspeicher 12, eine Tastatur 13 als Eingabemittel, einen Protokollspeicher 17 und einen Liegeprofilspeicher 20 auf. Der Prozessor 11 ist mit einem Display 5 sowie über eine Online-Verbindung 18 mit einem entfernt angeordneten Zentralprozessor 19 verbunden. Letzterer befindet sich beispielsweise in einem Krankenhaus, in einer Arztpraxis oder in einer Schlafforschungsanstalt. Weiterhin ist der Prozessor 11 über die Motorsteuerleitung 21 mit dem Linearmotor 14 verbunden. Ferner werden ihm - was in der Figur 4 nicht dargestellt, jedoch aus der Figur 2 ersichtlich ist - die von den Drucksensoren 8, den Höhensensoren 9 und den Lagesensoren 10 abgeleiteten Sensorsignale zur Verfügung gestellt.

Die dargestellte Vorrichtung weist mehrere Arbeitsmodi auf, die über die Tastatur 13 einleitbar sind.

Ein erster Arbeitsmodus besteht darin, mittels der Bedientastatur 13 ein gewünschtes Matratzenprofil auszuwählen und mittels des Prozessors 11 einzustellen. Zu diesem Zweck wurden im voraus im Matratzenprofilspeicher 12 Daten hinterlegt, die einer Vielzahl von verschiedenen Matratzenprofilen entsprechen. Jeder dieser Datensätze ist über die Bedientasten 13 im Sinne einer Auswahl eines gewünschten Matratzenprofils auswählbar. Der Prozessor 11 adressiert als Reaktion auf die eingegebenen Bedienbefehle den Matratzenprofilspeicher 12 derart, dass der jeweils gewünschte Datensatz aus dem Matratzenprofilspeicher 12 ausgelesen wird und steuert den Linearmotor 14 und die Ventile der Luftkammern derart, dass das gewünschte Matratzenprofil eingestellt wird. Jeder der genannten Datensätze enthält dabei bezüglich jeder einzelnen der Luftkammern Informationen über den Druck und die Höhe.

Ist das gewünschte Matratzenprofil eingestellt, dann überwacht der Prozessor 11 die Aufrechterhaltung dieser Einstellung unter Berücksichtigung der ihm zugeführten Eingangssignale und leitet bei Bedarf Anpassungen durch eine geeignete Ansteuerung des Linearmotors 14 und der Ventile 3 der Luftkammern in die Wege. Weiterhin überwacht der Prozessor 11 den Druck in jeder einzelnen Luftkammer dahingehend, dass ein zulässiger, im voraus festgelegter Maximaldruck nicht überschritten wird. Erkennt der Prozessor 11, dass der Luftdruck in einer der Kammern mit dem zulässigen Maximaldruck übereinstimmt, dann öffnet er das zugehörige Ventil, um Luft aus dieser Kammer abzulassen.

Um zu verhindern, dass dann, wenn die auf der Matratze liegende Person aufsteht, die Luftkammern komplett entspannen, kann in jeder Luftkammer ein Begrenzungselement vorgesehen sein. Dieses Begrenzungselement bewirkt, dass eine vorgegebene zulässige Maximalhöhe der Luftkammern nicht überschritten wird. Dadurch werden Beschädigungen oder gar Zerstörungen der Luftkammern vermieden. Sind die Luftkammern als Faltenbalge realisiert, kann das Begrenzungselement beispielsweise eine Leine sein.

Vorzugsweise wird im unbelasteten Zustand der Matratze ein Vordruck auf jede Luftkammer gegeben. Eine Einregelung auf ein gewünschtes Matratzenprofil erfolgt erst dann, wenn wieder eine Person auf der Matratze liegt.

Ein zweiter Arbeitsmodus besteht darin, mittels der Bedientastatur den Ablauf einer vorgegebenen Abfolge von Matratzenprofilen in die Wege zu leiten. Diese Abfolge von Matratzenprofilen wurde im voraus festgelegt und dient einer wiederholten Umlagerung der auf der Matratze liegenden Person. Dadurch kann erreicht werden, dass die Wirbelsäule der auf der Matratze liegenden Person beispielsweise während des Schlafes in vorgegebener Weise bewegt wird, so dass die genannte Person nach dem Aufwachen keine Rückenschmerzen hat. Bei kranken Patienten, die sich selbst kaum mehr bewegen können, kann durch die wiederholte Veränderung des Matratzenprofils erreicht werden, dass der Druck auf bestimmte Körperteile, beispielsweise die Fersen oder Schultern, nicht über einen langen Zeitraum konstant hoch bleibt. Dadurch kann ein Auftreten von Dekubitus vermieden oder zumindest verzögert werden. Auch in diesem Arbeitsmodus werden die dem Prozessor 11 von den Sensoren zugeführten Eingangssignale zusätzlich berücksichtigt, um das jeweils gewünschte Matratzenprofil aufrechtzuerhalten und an den Körper der auf der Matratze liegenden Person anzupassen.

Ein dritter Arbeitsmodus besteht darin, durch eine Auswertung der Liegeposition der auf der Matratze liegenden Person automatisch ein Matratzenprofil einzustellen, das der detektierten Liegeposition angepasst ist. Zu diesem Zweck wurden im voraus im Liegeprofilspeicher 12 Daten abgespeichert, die Matratzenprofilen entsprechen, die an die jeweilige Liegeposition angepasst sind. Eine mögliche Liegeposition ist die Bauchlage, eine zweite Liegeposition ist die Rückenlage, eine dritte Liegeposition ist ein Liegen auf der linken Körperseite, eine vierte Liegeposition ist ein Liegen auf der rechten Körperseite. Die jeweils zugehörigen Matratzenprofile sind derart, dass die auf der Matratze liegende Person jeweils bequem und wirbelsäulenfreundlich gelagert ist.

Die Detektion der Liegeposition erfolgt durch eine Auswertung der Ausgangssignale der Lagesensoren 10. Diese wirken mit Signalgebern zusammen, die in der Schlafanzughose der auf der Matratze liegenden Person befestigt, beispielsweise eingenäht, sind. So ist im Rückenbereich, im Bauchbereich, auf der linken Seite und auf der rechte Seite der Schlafanzughose jeweils ein derartiger Signalgeber vorgesehen, wobei diese Signalgeber voneinander unterscheidbare Signale abgeben. Diese werden, wenn sich der jeweilige Signalgeber nahe genug bei einem der Lagesensoren 10 befindet, von diesem detektiert und an die Steuereinheit 4 weitergeleitet. Liegt die auf der Matratze liegende Person beispielsweise auf dem Rücken, dann ist ausschließlich der im Rückenbereich der Schlafanzughose positionierte Lagesensor 10 nahe genug am Signalgeber, so dass lediglich dieser Lagesensor ein Signal an die Steuereinheit 4 weiterleitet. Diese adressiert als Reaktion auf den Empfang dieses Signals den Liegeprofilspeicher 20 derart, dass von dort diejenigen Daten ausgelesen werden, die der detektierten Liegeposition entsprechen. Diese Daten werden von der Steuereinheit 4 verwendet, um geeignete Ansteuersignale für den Linearmotor 14 und die Ventile der Luftkammern 2 zur Verfügung zu stellen. Der Liegeprofilspeicher 20 und der Matratzenprofilspeicher 12 können ggf. als ein einziger Speicher realisiert sein.

Die vorstehend genannten Betriebsarten können auch miteinander kombiniert werden, wodurch die Anpassung des Matratzenprofils an den Körper der auf der Matratze liegenden Person weiter verbessert wird.

Eine vorteilhafte Ausgestaltung besteht darin, die den Matratzenprofilen entsprechenden Daten in geeigneter Form auf dem Display 5 darzustellen. Der Benutzer hat dann die Möglichkeit, anhand der Displaydarstellung gezielt Veränderungen an den Matratzenprofilen vorzunehmen, die seinen individuellen Vorstellungen entsprechen. Dazu gehört beispielsweise auch eine Massage und eine Belüftung durch ein gezieltes Auf- und Abbewegen einzelner Kammern.

Eine andere vorteilhafte Ausgestaltung besteht darin, einen Protokollspeicher 17 vorzusehen, in welchem beispielsweise für die Dauer einer Nacht die eingestellten Matratzenprofile protokolliert werden. Die protokollierten Daten können im Nachhinein auf dem Display 5 dargestellt werden. Dies erlaubt Rückschlüsse darauf, ob der Schlafende überwiegend auf dem Bauch, dem Rücken oder der Seite schläft, ob er sich häufig oder eher selten im Schlaf dreht, usw..

Die Auswertung der protokollierten Daten kann alternativ auch mittels eines entfernt angeordneten Zentralrechners 19 erfolgen, der mit der Steuereinheit 4 über eine Online-Verbindung 18 gekoppelt ist. Dieser Zentralrechner steht beispielsweise in einem Krankenhaus. Dadurch wird es einem Arzt ermöglicht, die Schlafgewohnheiten eines seiner Patienten zu analysieren und bei Bedarf auch gezielt eingestellte Matratzenprofile aus der Ferne zu verändern, indem er neue, geänderten Matratzenprofilen entsprechende Daten über die Online-Verbindung 18 an die Steuereinheit 4 überträgt.

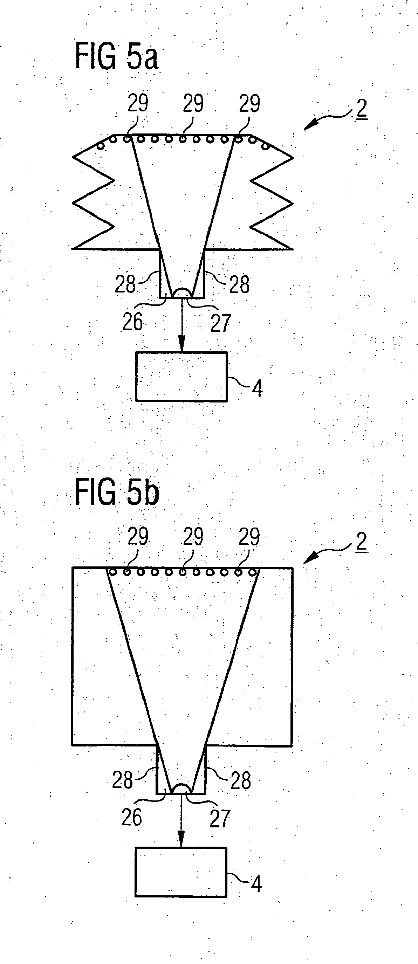

Die Figur 5 zeigt Skizzen eines erfindungsgemäßen Ausführungsbeispiels zur Messung der Höhe einer Luftkammer, bei welchem der Höhensensor ein Bildaufnahmeelement aufweist. Gemäß diesem Ausführungsbeispiel ist der Boden der Luftkammer 2 mit einer Vertiefung 26 versehen, in deren unterem Bereich das Bildaufnahmeelement 27 angeordnet ist. Dieses Bildaufnahmeelement 27 ist nach oben in Richtung der Oberseite der Luftkammer gerichtet. Der Aufnahmebereich des Bildaufnahmeelements 27 ist durch die Seitenwände 28 der Vertiefung 26 seitlich begrenzt. An der Innenfläche der Oberseite der Luftkammer ist eine Vielzahl von Markierungspunkten 29 vorgesehen. Ist die Luftkammer mit nur wenig Luft gefüllt, dann ist die Höhe der Luftkammer gering, und es ist im Aufnahmebereich des Bildaufnahmeelementes 27 nur eine von der Höhe der Luftkammer abhängige, vergleichsweise geringe Anzahl der Markierungspunkte 29 enthalten. Dieser Zustand ist in der Figur 5a veranschaulicht. Ist hingegen die Luftkammer vollständig mit Luft gefüllt, dann ist die Höhe der Luftkammer groß und es sind im Aufnahmebereich des Bildaufnahmeelements alle Markierungspunkte enthalten. Dieser Zustand ist in der Figur 5b veranschaulicht. Das Ausgangssignal des Bildaufnahmeelementes 27 wird an die Steuereinheit 4 übertragen. Diese ermittelt aus dem empfangenen Signal die jeweils vorliegende Anzahl der erfassten Markierungspunkte 29 und daraus dann die Höhe der Luftkammer.

### Bezugszeichenliste:

- 1: Matratze
- 2: Luftkammer
- 2a: Kontaktstück einer Luftkammer
- 3: Ventil
- 4: Steuereinheit
- 5: Display
- 6: Luftanschluss
- 7: Luftquelle
- 8: Drucksensor
- 9: Höhensensor
- 10: Lagesensorik, Lagesensor
- 11: Prozessor
- 12: Matratzenprofilspeicher
- 13: Eingabemittel; Tastatur
- 14: Linearmotor
- 15: Kolben
- 16: Kolbengehäuse
- 17: Protokollspeicher
- 18: Online-Verbindung
- 19: Zentralrechner
- 20: Liegeprofilspeicher
- 21: Motorsteuerleitung
- 22: Leitung zur Steuereinheit
- 23: Drucksensor
- 24: elektrisches Sicherheitsventil
- 25: mechanisches Überdruckventil
- 26: Vertiefung
- 27: Bildaufnahmeelement
- 28: Seitenwände
- 29: Markierungspunkte

## Patentansprüche

1. Vorrichtung zur Ermittlung der Höhe einer Luftkammer, mit
- einer Luftkammer,
- einem Höhensensor und
- einer mit dem Höhensensor verbundenen Steuereinheit,
**dadurch gekennzeichnet, dass**
- der Höhensensor ein Bildaufnahmeelement (27) aufweist,
- die Luftkammer (2) an der Innenfläche ihrer Oberseite mit einer Vielzahl von Markierungspunkten (29) versehen ist,
- das Bildaufnahmeelement (27) in Richtung der Oberseite der Luftkammer gerichtet ist und
- die Steuereinheit (4) aus dem Ausgangssignal des Bildaufnahmeelementes die Anzahl der erfassten Markierungspunkte und die Höhe der Luftkammer ermittelt.

2. Vorrichtung nach Anspruch 1, **dadurch gekennzeichnet, dass** der Boden der Luftkammer mit einer Vertiefung (26) versehen ist und das Bildaufnahmeelement (27) im unteren Bereich der Vertiefung angeordnet ist.

3. Vorrichtung nach Anspruch 2, **dadurch gekennzeichnet, dass** der Aufnahmebereich des Bildaufnahmeelements durch die Seitenwände (28) der Vertiefung seitlich begrenzt ist.

4. Vorrichtung nach einem der vorhergehenden Ansprüche, **dadurch gekennzeichnet, dass** bei mit nur wenig Luft gefüllter Luftkammer (2) im Aufnahmebereich des Bildaufnahmeelements eine geringe Anzahl von Markierungspunkten enthalten ist.

5. Vorrichtung nach einem der Ansprüche 1 - 4, **dadurch gekennzeichnet, dass** bei vollständig mit Luft gefüllter Luftkammer (2) im Aufnahmebereich des Bildaufnahmeelements alle Markierungspunkte enthalten sind.

6. Vorrichtung nach einem der vorhergehenden Ansprüche, **dadurch gekennzeichnet, dass** die Luftkammer (2) als Faltenbalg ausgebildet ist.

7. Vorrichtung nach einem der Ansprüche 1 - 5, **dadurch gekennzeichnet, dass** die Luftkammer (2) in Form einer teleskopierbaren Kolben-Zylinder-Einheit realisiert ist.

8. Vorrichtung nach einem der vorhergehenden Ansprüche, **dadurch gekennzeichnet, dass** die Luftkammer (2) Bestandteil einer eine Vielzahl von gitterförmig angeordneten Luftkammern aufweisenden Liegevorrichtung ist, wobei die Luftkammern jeweils mindestens einen Luftanschluss aufweisen.

9. Vorrichtung nach Anspruch 8, **dadurch gekennzeichnet, dass** jeder Luftkammer ein Höhensensor zugeordnet ist und die Höhensensoren jeweils mit der Steuereinheit (4) verbunden sind.

## Claims

1. Device for detecting the height of an air chamber comprising
- an air chamber,
- a height sensor and
- a control unit connected with the height sensor,
**characterised in that**
- the height sensor has an image recording element (27),
- the air chamber (2) is provided at the inner surface of its upper side with a plurality of marking points (29),
- the image recording element (27) is oriented in the direction of the upper side of the air chamber and
- the control unit (4) determines the number of the detected marking points and the height of the air chamber from the output signal of the image recording element.

2. Device according to claim 1, **characterised in that** the base of the air chamber is provided with a depression (26) and the image recording element (27) is arranged in the lower region of the depression.

3. Device according to claim 2, **characterised in that** the recording region of the image recording element is laterally bounded by the side walls (28) of the depression.

4. Device according to any one of the preceding claims, **characterised in that** for air chambers (2) filled with only a small amount of air a small number of marking points is present in the recording region of the image recording element.

5. Device according to any one of claims 1 to 4, **characterised in that** for air chambers (2) completely filled with air all marking points are present in the recording region of the image recording element.

6. Device according to any one of the preceding claims, **characterised in that** the air chamber (2) is constructed as a bellows.

7. Device according to any one of claims 1 to 5, **characterised in that** the air chamber (2) is realised in the form of a telescopic piston-cylinder unit.

8. Device according to any one of the preceding claims, **characterised in that** the air chamber (2) is a component of a lying-down device having a plurality of air chambers arranged in grid shape, wherein the air chambers each have at least one air connection.

9. Device according to claim 8, **characterised in that** a height sensor is associated with each air chamber and the height sensors are each connected with the control unit (4).

## Revendications

1. Dispositif pour déterminer la hauteur d'une chambre d'air, avec
- une chambre d'air,
- un capteur de hauteur et
- une unité de commande reliée au capteur de hauteur,
**caractérisé en ce que**
- le capteur de hauteur présente un élément de prise de vue (27),
- la chambre d'air (2) est dotée au niveau de la surface intérieure de sa face supérieure d'une pluralité de points de repère (29),
- l'élément de prise de vue (27) est dirigé vers la face supérieure de la chambre d'air et
- l'unité de commande (4) détermine à partir du signal de sortie de l'élément de prise de vue, le nombre de points de repère détectés et la hauteur de la chambre d'air.

2. Dispositif selon la revendication 1, **caractérisé en ce que** le fond de la chambre d'air est doté d'un évidement (26) et l'élément de prise de vue (27) est agencé dans la zone inférieure de l'évidement.

3. Dispositif selon la revendication 2, **caractérisé en ce que** la zone de prise de vue de l'élément de prise de vue est délimitée latéralement par les parois latérales (28) de l'évidement.

4. Dispositif selon l'une quelconque des revendications précédentes, **caractérisé en ce que** lorsque la chambre d'air (2) n'est que peu remplie d'air, un petit nombre de points de repère est contenu dans la zone de prise de vue de l'élément de prise de vue.

5. Dispositif selon l'une quelconque des revendications 1 à 4, **caractérisé en ce que** lorsque la chambre d'air (2) est complètement remplie d'air, tous les points de repère sont contenus dans la zone de prise de vue de l'élément de prise de vue.

6. Dispositif selon l'une quelconque des revendications précédentes, **caractérisé en ce que** la chambre d'air (2) est réalisée sous forme de soufflet.

7. Dispositif selon l'une quelconque des revendications 1 à 5, **caractérisé en ce que** la chambre d'air (2) est réalisée sous la forme d'une unité piston cylindre télescopique.

8. Dispositif selon l'une quelconque des revendications précédentes, **caractérisé en ce que** la chambre d'air (2) fait partie d'un dispositif de couchage présentant une pluralité de chambres d'air agencées en réseau, les chambres d'air présentant respectivement au moins une prise d'air.

9. Dispositif selon la revendication 8, **caractérisé en ce qu'**un capteur de hauteur est associé à chaque chambre d'air et les capteurs de hauteur sont respectivement reliés à l'unité de commande (4).
